# FASCICULE DE BREVET EUROPEEN

(11) **EP 3 999 730 B1**
(45) Date de publication et mention de la délivrance du brevet: **07.06.2023**
(21) Numéro de dépôt: 20750323.6
(22) Date de dépôt: 07.07.2020
(51) Int. Cl.: F02C 7/32, F02C 7/36, F16H 57/08

(54) **RÉDUCTEUR À TRAIN ÉPICYCLOÏDAL POUR UNE TURBOMACHINE**
PLANETENUNTERSETZUNGSGETRIEBE FÜR EINE TURBOMASCHINE
EPICYCLIC REDUCTION GEAR FOR A TURBOMACHINE

(30) Priorité: 16.07.2019 FR 1908013
(43) Date de publication de la demande: 25.05.2022
(73) Titulaire: Safran Transmission Systems, 92700 Colombes (FR)
(72) Inventeur: NIEPCERON, Clément, Paul, René, 77550 MOISSY-CRAMAYEL (FR); MORELLI, Boris, Pierre, Marcel, 77550 MOISSY-CRAMAYEL (FR)
(74) Mandataire: Gevers & Orès
(86) Numéro de dépôt international: PCT/FR2020/051204
(87) Numéro de publication internationale: WO 2021/009436

(56) Documents cités:
- FR-A1- 2 566 085
- FR-A1- 2 614 937
- FR-A1- 2 980 546
- FR-A1- 3 054 264

## Description

### Domaine technique de l'invention

La présente invention se rapporte à un réducteur notamment à train épicycloïdal pour une turbomachine et à une turbomachine comprenant un tel réducteur.

### Arrière-plan technique

Une turbomachine, telle qu'un turboréacteur à double flux, comprend classiquement une entrée d'air comportant une soufflante carénée dont le flux d'air en sortie se divise en un flux d'air qui pénètre dans une veine primaire et forme un flux chaud (ou flux primaire), et en un flux d'air qui s'écoule dans une veine secondaire qui s'étend autour de la veine primaire et qui forme un flux froid (ou flux secondaire).

La turbomachine comprend typiquement d'amont en aval, dans le sens d'écoulement des gaz, au moins un compresseur, une chambre de combustion, au moins une turbine, et une tuyère d'éjection dans laquelle les gaz de combustion sortant de la turbine (flux primaire) sont mélangés au flux secondaire.

Dans le cas d'une turbomachine à réducteur, un arbre d'une turbine (ci-après dénommé arbre de turbine) entraîne l'arbre de la soufflante (ci-après dénommé arbre de soufflante) par l'intermédiaire d'un réducteur à train épicycloïdal. Le réducteur est généralement placé dans une enceinte annulaire disposée entre la soufflante et le compresseur, et permet de réduire la vitesse de rotation de l'arbre de soufflante par rapport à celle de l'arbre de turbine.

Comme son nom l'indique, un réducteur à train épicycloïdal comprend un train épicycloïdal comportant au moins un solaire, une couronne, un satellite et un porte-satellite. En fonction des besoins, un tel réducteur à train épicycloïdal peut être configuré de différentes manières.

On s'intéressera plus particulièrement dans la suite de la description à la configuration communément appelée « planétaire ». Plus précisément, dans une telle configuration, le réducteur présente un solaire solidaire de l'arbre de turbine, une couronne solidaire de l'arbre de soufflante et un porte-satellite immobile (ou fixe).

Une turbomachine comprend en outre classiquement un boîtier d'accessoires plus connu sous l'acronyme anglais AGB pour « Accessory GearBox », ce boîtier AGB étant généralement disposé sur un carter de la soufflante à l'intérieur de la nacelle. Un boîtier AGB est destiné à transmettre une puissance mécanique prélevée sur le moteur de la turbomachine à des équipements tels qu'une pompe, un alterno-démarreur, un séparateur air/huile, etc. Chaque équipement est rapporté directement sur le boîtier AGB.

Il est connu du document FR-A1-3054264 au nom de la demanderesse d'entraîner en rotation le rotor d'un équipement via le solaire du réducteur. Un tel agencement permet de déplacer un équipement du boîtier AGB dans l'enceinte dans laquelle se trouve le réducteur, et ainsi de limiter l'encombrement du boîtier AGB et par conséquent de réduire les dimensions de la nacelle. Un tel agencement peut également permettre d'ajouter un équipement électrique ou hydraulique, de façon à augmenter la puissance électrique ou hydraulique disponible, sans toutefois accroître l'encombrement du boîtier AGB.

Toutefois, un tel agencement n'est pas compatible avec toutes les architectures de turbomachine puisqu'il exige un emplacement libre en amont du solaire (et de manière plus générale en amont du réducteur). Un tel emplacement n'est par exemple pas disponible lorsque l'architecture de la turbomachine comprend un guidage de l'arbre de turbine par rapport à l'arbre de soufflante en amont du réducteur.

L'objectif de la présente invention est ainsi de proposer un réducteur à train épicycloïdal muni d'un équipement permettant de remédier aux inconvénients précités.

### Résumé de l'invention

L'invention propose ainsi un réducteur à train épicycloïdal pour une turbomachine comprenant :
- un solaire mobile en rotation autour d'un premier axe A et apte à être entraîné en rotation par une turbine de la turbomachine ;
- une couronne entourant le solaire et mobile en rotation autour du premier axe A, la couronne étant solidaire d'un porte-couronne apte à entraîner en rotation un arbre de soufflante ;
- au moins un satellite mobile en rotation autour d'un second axe B, le satellite étant engrené avec le solaire et la couronne ;
- un porte-satellite immobile, le satellite étant guidé en rotation autour du second axe B par rapport à un palier du porte-satellite ;
- un équipement comprenant un rotor ;
caractérisé en ce que l'équipement est rapporté sur le palier du porte-satellite et le rotor de l'équipement est entraîné en rotation par le porte-couronne.

Un tel agencement de l'équipement est compatible avec davantage d'architectures de turbomachine.

Lorsque le réducteur comprend plusieurs satellites, le porte-couronne peut entraîner en rotation un ou plusieurs équipements pour chacun des satellites, de manière à limiter l'encombrement du boîtier AGB (et par conséquent réduire les dimensions de la nacelle) et/ou à augmenter la puissance électrique et/ou hydraulique disponible.

Le réducteur selon l'invention peut comprendre une ou plusieurs des caractéristiques et/ou étapes suivantes, prises isolément les unes des autres ou en combinaison les unes avec les autres :
- le rotor de l'équipement est entraîné en rotation par le porte-couronne via un train d'engrenages ;
- le train d'engrenages comprend un engrenage droit entre une denture intérieure du porte-couronne et une roue dentée à denture extérieure, la roue dentée étant mobile en rotation autour d'un troisième axe C décalé par rapport au premier axe A et parallèle aux premier et second axes A, B, la roue dentée étant solidaire d'un arbre d'entrainement mobile en rotation autour du troisième axe C, le rotor de l'équipement étant couplé en rotation avec l'arbre d'entrainement via des moyens d'accouplement ;
- la roue dentée est disposée dans un espace délimité par le porte-couronne et le palier ;
- l'arbre d'entrainement est guidé en rotation à l'intérieur du palier ;
- l'arbre d'entrainement est guidé en rotation via au moins un roulement ;
- les moyens d'accouplement comportent des dents bombées engagées dans des cannelures axiales ;
- l'arbre d'entrainement est guidé en rotation via deux roulements distants l'un de l'autre ;
- l'arbre d'entrainement comprend des moyens élastiquement déformables disposés axialement entre la roue dentée et les roulements ;
- les moyens d'accouplement comportent des dents droites engagées dans des cannelures axiales.

La présente invention concerne encore une turbomachine comprenant un réducteur tel que décrit précédemment.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue schématique en coupe axiale d'une turbomachine comprenant un réducteur selon l'invention ;
[Fig.2] la figure 2 est une vue en perspective en demi-coupe axiale d'un réducteur selon un premier mode de réalisation ;
[Fig.3] la figure 3 est une vue en demi-coupe axiale du réducteur selon le premier mode de réalisation ;
[Fig.4] la figure 4 est une vue en perspective en demi-coupe axiale d'un réducteur selon un second mode de réalisation.

### Description détaillée de l'invention

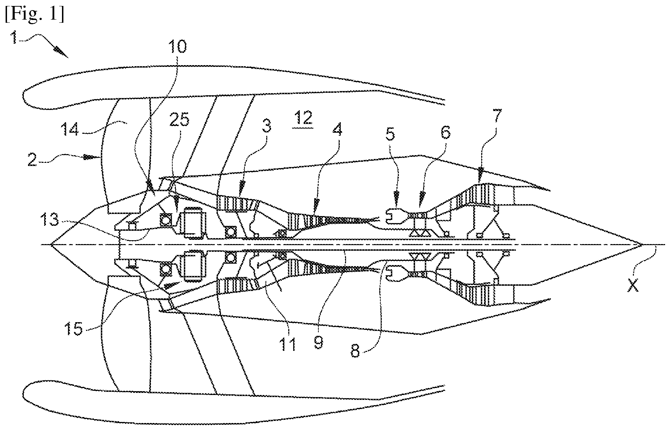

Sur la figure 1 est représentée une turbomachine 1 à réducteur, qui comprend classiquement d'amont en aval, dans le sens d'écoulement des gaz, une soufflante carénée 2 et un compresseur basse pression 3, un compresseur haute pression 4, une chambre de combustion 5, une turbine haute pression 6 et une turbine basse pression 7. Les rotors du compresseur haute pression 4 et de la turbine haute pression 6 sont reliés par un arbre haute pression 8 et forment avec lui un corps haute pression (HP). Les rotors du compresseur basse pression 3 et de la turbine basse pression 7 sont reliés par un arbre basse pression 9 et forment avec lui un corps basse pression (BP).

Par convention, dans la présente demande, les termes « amont » et « aval » sont définis par rapport au sens de circulation des gaz dans la turbomachine. On entend par « axial » ou « axialement » toute direction parallèle à l'axe X de la turbomachine (axe de rotation des arbres haute pression et basse pression), et par « radial » ou « radialement » toute direction perpendiculaire à l'axe X de la turbomachine. De même, par convention dans la présente demande, les termes « interne », « externe », « intérieur » et « extérieur » sont définis radialement par rapport à l'axe X de la turbomachine.

Le flux d'air généré par la soufflante 2 est divisé, par un bec de séparation d'une structure fixe 10 de la turbomachine 1, en un flux d'air primaire qui pénètre dans une veine primaire 11 et un flux d'air secondaire qui s'écoule dans une veine secondaire 12 et participe de manière prépondérante à la poussée fournie par la turbomachine 1.

La soufflante 2 comporte un arbre 13 (ci-après dénommé arbre de soufflante 13) portant des pales 14 et entraîné en rotation par l'arbre basse pression 9 via un réducteur à train épicycloïdal 15. L'arbre de soufflante 13, l'arbre basse pression 9 et l'arbre haute pression 8 présentent un même axe de rotation qui est coaxial avec l'axe X de la turbomachine 1.

Selon l'invention, le réducteur à train épicycloïdal 15 comprend :
- un solaire 16 mobile en rotation autour d'un premier axe A et apte à être entraîné en rotation par une turbine (ici turbine basse pression 7) de la turbomachine 1 ;
- une couronne 17 entourant le solaire 16 et mobile en rotation autour du premier axe A, la couronne 17 étant solidaire d'un porte-couronne 18 apte à entraîner en rotation l'arbre de soufflante 13 ;
- au moins un satellite 19 mobile en rotation autour d'un second axe B, le satellite 19 étant engrené avec le solaire 16 et la couronne 17 ;
- un porte-satellite 20 immobile (ou fixe), le satellite 19 étant guidé en rotation autour du second axe B par rapport à un palier 35 du porte-satellite 20 ;
- un équipement 22 (ou accessoire) comprenant un rotor 23.

L'équipement 22 est rapporté sur le palier 35 du porte-satellite 20 et le rotor 23 de l'équipement 22 est entraîné en rotation par le porte-couronne 18.

Le réducteur à train épicycloïdal 15 est ainsi de type « planétaire ». Le réducteur 15 permet de réduire la vitesse de rotation de l'arbre de soufflante 13 par rapport à celle de l'arbre basse pression 9.

L'équipement 22 comprend un rotor 23 et un stator 24. L'équipement 22 est par exemple une pompe, un alternateur, etc.

Tel qu'illustré sur les figures, plus précisément, le réducteur 15 est logé et lubrifié dans une enceinte 25 annulaire disposée entre la soufflante 2 et le compresseur basse pression 3.

Le solaire 16 est central et couplé en rotation avec l'arbre basse pression 9. L'axe de rotation du solaire 16 (premier axe A) est coaxial avec l'axe X de la turbomachine 1.

La couronne 17 est bridée à un porte-couronne 18 qui est solidaire de l'arbre de soufflante 13. Le porte-couronne 18 comprend une enveloppe 26 (ou voile) s'évasant depuis une collerette axiale 27 (ou col) jusqu'à une collerette radiale 28. La collerette radiale 28 du porte-couronne 18 est bridée à un collet 29 de la couronne 17 via par exemple une pluralité de boulons (non représentés) répartis de manière régulière autour de l'axe A. Le porte-couronne 18 peut être venu de matière avec l'arbre de soufflante 13 ou couplé en rotation avec l'arbre de soufflante 13 via des moyens d'accouplement.

Le réducteur 15 comprend plusieurs satellites 19 répartis de manière régulière autour de l'axe A entre le solaire 16 et la couronne 17. Chaque satellite 19 est conjointement engrené avec le solaire 16 et la couronne 17. Chaque satellite 19 est traversé et guidé en rotation autour d'un second axe B par rapport à un palier 35 du porte-satellites 20. Le porte-couronne 18 permet ici d'entraîner en rotation un unique équipement 22 par satellite 19, mais il pourrait en entraîner plusieurs. De même, le porte-couronne 18 peut entraîner en rotation un ou plusieurs équipements 22 pour chacun des satellites 19.

Le porte-satellites 20 est solidaire de la structure fixe 10 de la turbomachine 1 et se présente globalement sous la forme d'une cage supportant les satellites 19. Le porte-satellites 20 comprend ainsi une paroi périphérique 30 bordée par une paroi latérale amont 31 et une paroi latérale aval 32. Les satellites 19 sont disposés entre les parois latérales 31, 32 du porte-satellites 20. Pour chacun des satellites 19, la paroi périphérique 30 comporte une ouverture 33, de manière à permettre l'engrènement entre le satellite 19 et la couronne 17. Le palier 35 associé à chacun des satellites 19 est mis et maintenu en position par rapport aux parois latérales 31, 32 du porte-satellites 20. Chaque palier 35 comprend une bague 21 et deux rangées annulaires de roulements ou d'éléments roulants 34 (ici des rouleaux cylindriques) distantes l'une de l'autre. Les roulements 34 de chacune des rangées sont reliés d'une part à la bague 21 du palier 35 du porte-satellites 20 et d'autre part au satellite 19. Le réducteur 15 comprend des moyens d'acheminement d'un lubrifiant liquide (non représentés) jusqu'aux roulements 34. Avantageusement, les moyens d'acheminement sont configurés pour acheminer du lubrifiant liquide jusqu'à l'équipement 22.

Selon les modes de réalisation illustrés sur les figures, le rotor 23 de l'équipement 22 est entraîné en rotation par le porte-couronne 18 via un train d'engrenages 36. Le rotor de l'équipement pourrait par exemple être entraîné par le porte-couronne via une liaison par clavettes, une liaison par cannelures et dentelures, une liaison par frettage, etc.

Un train d'engrenages permet de décaler l'axe de rotation du rotor de équipement par rapport à l'axe de rotation du porte-couronne (premier axe A) et/ou de modifier les paramètres de fonctionnement d'un équipement (vitesse de rotation, couple, etc.).

Un train d'engrenages présente un rapport de transmission défini de manière à faire fonctionner l'équipement dans la plage de fonctionnement souhaitée.

Selon les modes de réalisation illustrés sur les figures, le train d'engrenages 36 comprend un engrenage droit entre une denture intérieure 37 du porte-couronne 18 et une roue dentée à denture extérieure 38. La roue dentée 38 est mobile en rotation autour d'un troisième axe C décalé par rapport au premier axe A et parallèle aux premier et second axes A, B. La roue dentée 38 est solidaire d'un arbre d'entrainement 39 mobile en rotation autour du troisième axe C, le rotor 23 de l'équipement 22 étant couplé en rotation avec l'arbre d'entrainement 39 via des moyens d'accouplement 40.

Plus précisément, la denture intérieure 37 du porte-couronne 18 s'étend autour du premier axe A. La denture intérieure 37 du porte-couronne 18 est disposée dans un espace 41 délimité par le porte-couronne 18 et le palier 35 (ou le porte-satellites 20). La denture intérieure 37 du porte-couronne 18 est venue de matière avec l'enveloppe 26 du porte-couronne 18, de manière à former un porte-couronne d'un seul tenant. La roue dentée à denture extérieure 38 est cylindrique. L'axe de rotation de la roue dentée 38 (troisième axe C) est ici coaxial avec l'axe de rotation du satellite 19 (deuxième axe B) mais il pourrait être décalé. La roue dentée 38 est disposée dans l'espace 41 délimité par le porte-couronne 18 et le palier 35 (ou le porte-satellites 20). Plus précisément, la roue dentée 38 est disposée axialement entre l'enveloppe 26 du porte-couronne 18 et la paroi latérale amont 31 du porte-satellites 20. L'arbre d'entrainement 39 est venu de matière avec la roue dentée 38.

Selon les modes de réalisation illustrés sur les figures, l'arbre d'entrainement 39 est guidé en rotation via un palier 42 rapporté sur la bague 21 du palier 35. Le palier 42 comprend un corps 43 tubulaire et une base 44 mise et maintenue en position dans un lamage amont de la bague 21. Autrement dit, le palier 42 est disposé du côté du porte-couronne 18. Le corps 43 tubulaire du palier 42 forme un logement pour au moins un roulement 45, 46 nécessaire au guidage de l'arbre d'entrainement 39.

Selon les modes de réalisation illustrés sur les figures, le stator 24 de l'équipement 22 est mis et maintenu en position dans la bague 21 du palier 35 au niveau d'une extrémité aval. Autrement dit, le stator 24 de l'équipement 22 est disposé à l'opposé du porte-couronne 18. L'axe de rotation du rotor 23 de l'équipement 22 (troisième axe C) est ici coaxial avec l'axe de rotation du satellite 19 (deuxième axe B), mais il pourrait être décalé.

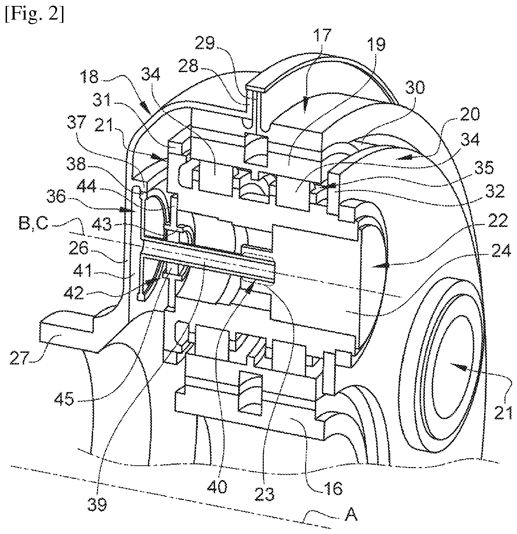

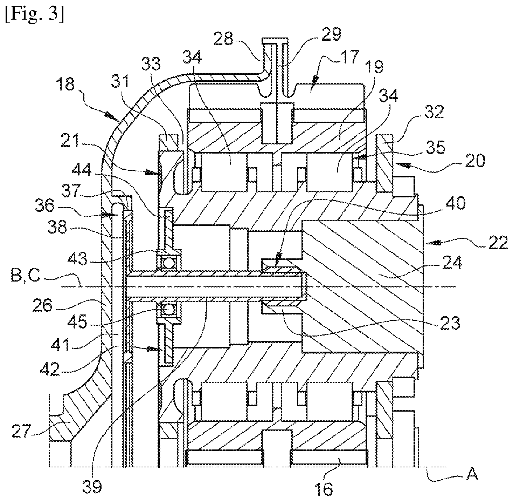

Selon le premier mode de réalisation illustré sur les figures 2 et 3, l'arbre d'entrainement 39 est guidé en rotation par rapport au logement du palier 42 via un roulement 45, les moyens d'accouplement 40 présentant un débattement angulaire.

De tels moyens d'accouplement 40 permettent de compenser les désalignements existants entre la roue dentée 38 et le rotor 23 de l'équipement 22.

Les moyens d'accouplement 40 sont par exemple des moyens d'accouplement à denture bombée communément appelés « cannelures bombées » comportant des dents bombées (et autrement dit des dents présentant chacune en section axiale un profil bombé convexe) engagées dans des cannelures axiales. Les dents bombées sont soit réalisées dans le rotor de l'équipement soit dans l'arbre d'entrainement 39.

Avantageusement, le roulement 45 est un roulement à billes.

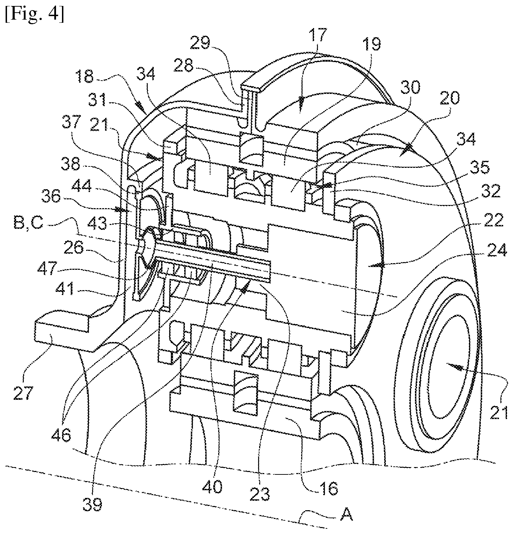

Selon le second mode de réalisation illustré sur la figure 4, l'arbre d'entrainement 39 est guidé en rotation par rapport au logement du palier 42 via deux roulements 46 distants l'un de l'autre, l'arbre d'entrainement 39 comprenant des moyens élastiquement déformables 47 disposés axialement entre la roue dentée 38 et les deux roulements 46.

De tels moyens élastiquement déformables 47 permettent de compenser les désalignements existants entre la roue dentée 38 et le rotor 23 de l'équipement 22.

Plus précisément, les moyens élastiquement déformables 47 sont ici un soufflet.

Les moyens élastiquement déformables 47 pourraient être un dispositif d'accouplement flexible connus sous la désignation anglaise « flex coupling ».

Les soufflets ou les dispositifs « flex coupling » apportent une souplesse locale pour maîtriser les éventuels désalignements entre la roue dentée 38 et la denture intérieure 37 du porte-couronne 18.

Les moyens d'accouplement 40 sont par exemple des moyens d'accouplement à denture droite comportant des dents droites (et autrement dit des dents présentant chacune en section axiale un profil droit) engagées dans des cannelures axiales. Les dents droites sont soit réalisées dans le rotor de l'équipement soit dans l'arbre d'entrainement 39.

Avantageusement, les roulements 46 sont des roulements à billes.

## Revendications

1. Réducteur à train épicycloïdal (15) pour une turbomachine (1) comprenant :
- un solaire (16) mobile en rotation autour d'un premier axe (A) et apte à être entraîné en rotation par une turbine (7) de la turbomachine (1) ;
- une couronne (17) entourant le solaire (16) et mobile en rotation autour du premier axe (A), la couronne (17) étant solidaire d'un porte-couronne (18) apte à entraîner en rotation un arbre de soufflante (13) ;
- au moins un satellite (19) mobile en rotation autour d'un second axe (B), le satellite (19) étant engrené avec le solaire (16) et la couronne (17) ;
- un porte-satellite (20) immobile, le satellite (19) étant guidé en rotation autour du second axe (B) par rapport à un palier (35) du porte-satellite (20) ;
- un équipement (22) comprenant un rotor (23) ;
**caractérisé en ce que** l'équipement (22) est rapporté sur le palier (35) du porte-satellite (20) et le rotor (23) de l'équipement (22) est entraîné en rotation par le porte-couronne (18).

2. Réducteur (15) selon la revendication 1, **caractérisé en ce que** le rotor (23) de l'équipement (22) est entraîné en rotation par le porte-couronne (18) via un train d'engrenages (36).

3. Réducteur (15) selon la revendication 2, **caractérisé en ce que** le train d'engrenages (36) comprend un engrenage droit entre une denture intérieure (37) du porte-couronne (18) et une roue dentée (38) à denture extérieure, la roue dentée (38) étant mobile en rotation autour d'un troisième axe (C) décalé par rapport au premier axe (A) et parallèle aux premier et second axes (A, B), la roue dentée (38) étant solidaire d'un arbre d'entrainement (39) mobile en rotation autour du troisième axe (C), le rotor (23) de l'équipement (22) étant couplé en rotation avec l'arbre d'entrainement (39) via des moyens d'accouplement (40).

4. Réducteur (15) selon la revendication 3, **caractérisé en ce que** la roue dentée (38) est disposée dans un espace (41) délimité par le porte-couronne (18) et le palier (35).

5. Réducteur (15) selon la revendication 3 ou 4, **caractérisé en ce que** l'arbre d'entrainement (39) est guidé en rotation à l'intérieur du palier (35).

6. Réducteur (15) selon la revendication 5, **caractérisé en ce que** l'arbre d'entrainement (39) est guidé en rotation via au moins un roulement (45).

7. Réducteur (15) selon la revendication 6, **caractérisé en ce que** les moyens d'accouplement (40) comportent des dents bombées engagées dans des cannelures axiales.

8. Réducteur (15) selon l'une des revendications 3 à 5, **caractérisé en ce que** l'arbre d'entrainement (39) est guidé en rotation via deux roulements (46) distants l'un de l'autre.

9. Réducteur (15) selon la revendication 8, **caractérisé en ce que** l'arbre d'entrainement (39) comprend des moyens élastiquement déformables (47) disposés axialement entre la roue dentée (38) et les roulements (46).

10. Turbomachine (1) comprenant un réducteur (15) selon l'une des revendications précédentes.

## Patentansprüche

1. Epizyklisches Untersetzungsgetriebe (15) für eine Turbomaschine (1), umfassend:
- ein Sonnenrad (16), um eine erste Achse (A) herum rotationsbeweglich und geeignet, durch eine Turbine (7) der Turbomaschine (1) in Rotation versetzt zu werden;
- einen Kranz (17), der das Sonnenrad (16) umgibt und um die erste Achse (A) herum rotationsbeweglich ist, wobei der Kranz (17) mit einem Kronenträger (18) einstückig ist, der geeignet ist, eine Gebläsewelle (13) in Rotation zu versetzen;
- mindestens ein um eine zweite Achse (B) herum rotationsbewegliches Planetenrad (19), wobei das Planetenrad (19) mit dem Sonnenrad (16) und dem Kranz (17) in Eingriff vorliegt;
- einen unbeweglichen Planetenträger (20), wobei das Planetenrad (19) bezüglich eines Lagers (35) des Planetenträgers (20) um die zweite Achse (B) herum rotationsgeführt wird;
- eine Einrichtung (22), umfassend einen Rotor (23);
**dadurch gekennzeichnet, dass** die Einrichtung (22) über dem Lager (35) des Planetenträgers (20) angebracht ist und der Rotor (23) der Einrichtung (22) durch den Kronenträger (18) in Rotation versetzt wird.

2. Untersetzungsgetriebe (15) nach Anspruch 1, **dadurch gekennzeichnet, dass** der Rotor (23) der Einrichtung (22) durch den Kronenträger (18) mittels eines Getriebezugs (36) in Rotation versetzt wird.

3. Untersetzungsgetriebe (15) nach Anspruch 2, **dadurch gekennzeichnet, dass** der Getriebezug (36) ein Stirnradgetriebe zwischen einer Innenverzahnung (37) des Kronenträgers (18) und einem Zahnrad (38) mit Außenverzahnung umfasst, wobei das Zahnrad (38) um eine dritte Achse (C) herum rotationsbeweglich ist, die bezüglich der ersten Achse (A) versetzt und zu der ersten und zweiten Achse (A, B) parallel ist, wobei das Zahnrad (38) mit einer um die dritte Achse (C) herum rotationsbeweglichen Antriebswelle (39) einstückig ist, wobei der Rotor (23) der Einrichtung (22) mit der Antriebswelle (39) mittels Kopplungsmitteln (40) rotationsgekoppelt ist.

4. Untersetzungsgetriebe (15) nach Anspruch 3, **dadurch gekennzeichnet, dass** das Zahnrad (38) in einem Raum (41) angeordnet ist, der durch den Kronenträger (18) und das Lager (35) eingegrenzt ist.

5. Untersetzungsgetriebe (15) nach Anspruch 3 oder 4, **dadurch gekennzeichnet, dass** die Antriebswelle (39) im Inneren des Lagers (35) rotationsgeführt wird.

6. Untersetzungsgetriebe (15) nach Anspruch 5, **dadurch gekennzeichnet, dass** die Antriebswelle (39) mittels mindestens ein Lagers (45) rotationsgeführt wird.

7. Untersetzungsgetriebe (15) nach Anspruch 6, **dadurch gekennzeichnet, dass** die Kopplungsmittel (40) gebogene Zähne beinhalten, die in den axialen Nuten in Eingriff gebracht sind.

8. Untersetzungsgetriebe (15) nach einem der Ansprüche 3 bis 5, **dadurch gekennzeichnet, dass** die Antriebswelle (39) mittels zwei voneinander beabstandeten Kugellagern (46) rotationsgeführt wird.

9. Untersetzungsgetriebe (15) nach Anspruch 8, **dadurch gekennzeichnet, dass** die Antriebswelle (39) elastisch verformbare Mittel (47) umfasst, die axial zwischen dem Zahnrad (38) und den Kugellagern (46) angeordnet sind.

10. Turbomaschine (1) umfassend ein Untersetzungsgetriebe (15) nach einem der vorstehenden Ansprüche.

## Claims

1. An epicyclic reduction gear (15) for a turbomachine (1) comprising:
- a sun gear (16) that is rotatable about a first axis (A) and adapted to be rotatably driven by a turbine (7) of the turbomachine (1);
- a ring gear (17) surrounding the sun gear (16) and being rotatable about the first axis (A), the ring gear (17) being secured to a ring gear carrier (18) adapted to rotatably drive a fan shaft (13);
- at least one planet gear (19) that is rotatable about a second axis (B), the planet gear (19) being meshed with the sun gear (16) and the ring gear (17);
- an immobile planet carrier (20), the planet gear (19) being rotatably guided about the second axis (B) with respect to a bearing (35) of the planet carrier (20);
- an item of equipment (22) comprising a rotor (23);
**characterised in that** the item of equipment (22) is fitted to the bearing (35) of the planet carrier (20) and the rotor (23) of the item of equipment (22) is rotatably driven by the ring gear carrier (18).

2. The reduction gear (15) according to claim 1, **characterised in that** the rotor (23) of the item of equipment (22) is rotatably driven by the ring gear carrier (18) via a gear train (36).

3. The reduction gear (15) according to claim 2, **characterised in that** the gear train (36) comprises a spur gear between an inner toothing (37) of the ring gear carrier (18) and a toothed wheel (38) with outer toothing, the toothed wheel (38) being rotatable about a third axis (C) offset with respect to the first axis (A) and parallel to the first and second axes (A, B), the toothed wheel (38) being secured to a drive shaft (39) that is rotatable about the third axis (C), the rotor (23) of the item of equipment (22) being rotatably coupled with the drive shaft (39) via coupling means (40).

4. The reduction gear (15) according to claim 3, **characterised in that** the toothed wheel (38) is arranged in a space (41) delimited by the ring gear carrier (18) and the bearing (35).

5. The reduction gear (15) according to claim 3 or 4, **characterised in that** the drive shaft (39) is rotatably guided within the bearing (35).

6. The reduction gear (15) according to claim 5, **characterised in that** the drive shaft (39) is rotatably guided via at least one rolling bearing (45).

7. The reduction gear (15) according to claim 6, **characterised in that** the coupling means (40) comprise domed teeth engaged in axial splines.

8. The reduction gear (15) according to one of claims 3 to 5, **characterised in that** the drive shaft (39) is rotatably guided via two rolling bearings (46) spaced apart from each other.

9. The reduction gear (15) according to claim 8, **characterised in that** the drive shaft (39) comprises elastically deformable means (47) arranged axially between the toothed wheel (38) and the rolling bearing (46).

10. A turbomachine (1) comprising a reduction gear (15) according to one of the preceding claims.
